# EUROPÄISCHE PATENTSCHRIFT

(11) **EP 2 176 059 B1**
(45) Veröffentlichungstag und Bekanntmachung des Hinweises auf die Patenterteilung: **14.09.2011**
(21) Anmeldenummer: 08774913.1
(22) Anmeldetag: 09.07.2008
(51) Int. Cl.: B29C 70/46, B29C 45/14

(54) **VERFAHREN UND VORRICHTUNG ZUR HERSTELLUNG EINES VERSTÄRKTEN COMPOSITE-PRODUKTES**
METHOD AND DEVICE FOR PRODUCING A REINFORCED COMPOSITE PRODUCT
PROCÉDÉ ET DISPOSITIF DE FABRICATION D'UN PRODUIT COMPOSITE RENFORCÉ

(30) Priorität: 03.08.2007 DE 102007036660
(43) Veröffentlichungstag der Anmeldung: 21.04.2010
(73) Patentinhaber: KraussMaffei Technologies GmbH, 80997 München (DE)
(72) Erfinder: BÜRKLE, Erwin, 83671 Benediktbeuern (DE); STRÜMPEL, Franziska, 82431 Kochel Am See (DE)
(74) Vertreter: Zollner, Richard
(86) Internationale Anmeldenummer: PCT/EP2008/058907
(87) Internationale Veröffentlichungsnummer: WO 2009/019102

(56) Entgegenhaltungen:
- EP-A- 1 839 834
- WO-A-96/36477
- DE-A1- 10 320 331
- DE-B3-102005 061 280
- US-A1- 2005 156 352
- US-A1- 2007 152 380

## Beschreibung

Die vorliegende Erfindung betrifft ein Verfahren und eine Vorrichtung zur Herstellung eines verstärkten Composite-Produktes unter Verwendung einer Spritzgießmaschine mit einer Plastifizier- und Einspritzeinrichtung.

In vielen technischen Bereichen nimmt der Einsatz von Faser-Kunststoff-Verbundteilen kontinuierlich zu. Dabei schätzt man neben den guten mechanischen Eigenschaften besonders die Leichtbaumöglichkeiten. So ergeben sich immer mehr Einsatzmöglichkeiten im Fahrzeug- und Flugzeugbau. Auch bei extremen Belastungen und extremen Leichtbauweisen, wie im Formel-1-Sport, bei Leichtbaufahrrädern, etc. kommen die Faser-Kunststoff-Verbundwerkstoffe zum Einsatz.

In solchen Verbundwerkstoffen leiten insbesondere die Fasern die Kräfte. Durch ihre im Vergleich zur Kunststoffmatrix hohe Steifigkeit ziehen sie die Lasten auf sich. Quer zur Faser findet in der Regel keine Verstärkungswirkung statt.

Der Kunststoff ist in der Regel eine Matrix, in die die Fasern eingebettet sind. Als Fasern kommen anorganische Verstärkungsfasern wie Basaltfasern, Borfasern, Glasfasern, Keramikfasern oder Kieselsäurefasern, als metallische Verstärkungsfasern Stahlfasern, als organische Verstärkungsfasern Aramidfasern, Kohlestofffasern, Polyesterfasern, Nylonfasern und Pölyethylenfasern und als Naturfasern beispielsweise Flachsfasern, Hanffasem oder Sisalfasern in Betracht. Für den Kunststoff können thermoplastische Matrixsysteme mit Standardkunststoffen (PP, PE), Konstruktionskunststoffe (PA) oder Hochleistungskunststoffe wie Polyetheretherketone, Polyphenylensulfide, Polysulon oder Polyetherimide, oder aber duroplastische Matrixmaterialien, wie Epoxidharz, ungesättigtes Polyesterharz, Vinylesterharz, Phenolformaldehydharz, Methacrylatharz, Polyurethan oder Aminoharze verwendet werden.

Überdies werden die Verstärkungsfasern nach Faserlänge eingeteilt, und zwar in Kurzfasem mit einer Länge von 0,1 bis 2 mm, in Langfasem mit einer Länge von 2 bis 50 mm und Endlosfasern mit einer Länge von über 50 mm.

Als Faserhalbzeuge werden verwendet Gewebe, Gelege, Multiaxialgelege, Gestecke, Geflechte, Matten, Vliese, Feinschnitte und Abstandsgewebe.

Besonders häufig werden bei der Verarbeitung von Faser-Kunststoff-Verbundmaterialien Faser-Matrix-Halbzeuge verwendet. Dabei handelt es sich um vorimprägnierte Faser-Matrix-Systeme, insbesondere thermoplastische oder duroplastische Halbzeuge. Als Faser-Matrix-Halbzeuge mit duroplastischer Matrix sind bekannt Prepregs, Sheet Moulding Compounds (SMC) und Bulk Moulding Compounds (BMC). Als Faser-Matrix-Halbzeug mit thermoplastischer Matrix sind beispielsweise bekannt langfaserverstärkte Thermoplaste, glasmattenverstärkte Thermoplaste und thermoplastische Prepregs.

Die Wahl des Matrixsystems entscheidet über die Einsatzgrenzen des faserverstärkten Kunststoffs. Neben den mechanischen Eigenschaften (z. B. das Elastizitätsmödul oder die Steifigkeit) gibt es eine Reihe von weiteren Kriterien, wie Temperatureinsatzbereiche (Schmelzpunkt, Glasübergangstemperatur), Medienbeständigkeit (sauer, basisch), Strahlungsbeständigkeit (UV-Strahlung), Langzeitverhalten (Kriechen, Relaxation), Feuchteaufnahme oder Schlagzähigkeit, die je nach Einsatzgebiet berücksichtigt werden müssen.

Die Verarbeitungsverfahren zur Herstellung von Bauteilen aus Faser-Kunststoff-Verbunden hängen in erste Linie von der Art der verwendeten Halbzeuge ab. Die Auswahl des Verfahrens richtet sich überdies nach der zu fertigenden Stückzahl sowie den geometrischen Abmessungen des Bauteils. Für vorimprägnierte Halbzeuge sind insbesondere das Autoklavverfahren, das Faserspritzen, das Pressen, das Pultrusionsverfahren, das Spritzgießverfahren und das Wickelverfahren bekannt.

Beim Pressen werden un- oder teilkonsolidierte Faser-Matrix-Halbzeuge in geöffnete Formen eingelegt und unter Wärmezufuhr in die gewünschte Form verpresst. Nach der Entnahme aus der Presse werden diese umgeformten Zwischenprodukte in nachgelagerten Verfahrensschritten weiterverarbeitet. Ein entsprechendes Verfahren ist in der DE 103 20 331 A1 beschrieben. Diese Verarbeitungsweise ist insbesondere für Gewebe-, Gelege-, Geflechte- und Mattenhalbzeuge bekannt. Dabei unterscheidet man zwischen Formpressen und Fließpressen.

Dagegen ist es bei Verwendung von Faser-Matrix-Halbzeugen mit Kurzfasem (Länge 0,1 bis 2 mm) bekannt, diese auch im Spritzgießverfahren mit thermoplastischen oder duroplastischem Material oder in einem Mischverfahren mit duroplastischen Kunststoffmaterialien mittels eines Mischkopfes zu verarbeiten. Dabei werden die Fasern vor dem Aushärten in die Kunststoffschmelze oder das Reaktionsgemisch eingebracht.

Eine Vorrichtung und ein Verfahren zur Herstellung von Polymer- und Komposite-Produkten ist in der WO 96/36477 beschrieben, wobei eine Vielzahl von Verfahrensmöglichkeiten angegeben sind. Die einzelnen Verfahrensschritte werden insbesondere mit einer Drehtischvorrichtung, einer separaten Presseinrichtung und einer kontinuierlichen Extrusionsvorrichtung dargestellt. Dabei kann bei den diskontinuierlichen Verfahren zyklusweise immer nur ein Produkt hergestellt werde.

In der DE 102 27 636 A1 ist ein Verfahren und eine Vorrichtung beschrieben, bei der mit einer Wendeplatten-Schließeinheit in einem erste Schritt ein Fasermaterial umgeformt wird, welches in einem zweiten Schritt mit Kunststoff umspritzt wird. Ein Umformung von vorkonsolidierten Faser-Matrix-Systemen ist darin nicht angegeben. Es ist auch dem Fall in der US 2005/156352 A1.

Aufgabe der vorliegenden Erfindung ist es, das vorgenannte Verfahren derart weiterzuentwickeln, dass verstärkte Composite-Produkte aus vorimprägnierten bzw. vorkonsolidierten Faser-Matrix-Systemen verfahrenseffizient hergestellt und Kunststoff-Verbundmaterialien mit besonderen Funktional- und Materialeigenschaften fertig gebildet werden können.

Diese Aufgabe wird durch die in den Ansprüchen 1 angegebenen Merkmale gelöst.

Die Erfinder haben herausgefunden, wie sich in effizienter Weise Faser-Matrix-Halbzeuge, insbesondere langfaserverstärkte Thermoplaste in Form von Geweben, Gelegen, Gestecken, Geflechten, Matten oder Vliesen in Kombination mit Spritzgießmaschinen verarbeiten lassen, wobei am Ende des Produktionsschrittes ein voll funktionsfähiges, fertiges Composite-Produkt, insbesondere mit besonderer Funktionalität, entsteht. Dabei werden die bislang getrennt in verschiedenen Industrien durchgeführten Verfahrensschritte des Umformens eines Faser-Matrix-Halbzeuges unter Ausbildung eines vollkonsolidierten Zwischenproduktes sowie das An-, Über- oder Umspritzens eines Produktes mit einem Kunststoff-Matrix kombiniert, wobei nun ganz neue Herstellmöglichkeiten entstehen. So können während des Herstellungsprozesses Funktionselemente vollständig integriert und mittels der Kunststoffmatrix an das vollkonsolidierte Faser-Matrix-Zwischenprodukt angebunden oder sogar vollständig darin eingegossen werden. Insofern erhält man ein fertiges verstärktes Composite-Produkt mit besonderer Funktionalität.

Die Kemidee besteht dabei darin, in einem ersten Schritt ein vorimprägniertes Faser-Matrix-Halbzeug in einem Formwerkzeug nach Art einer Presse umzuformen und dabei voll zu konsolidieren. Nach dem Öffnen und Umsetzen des so hergestellten voll konsolidierten Zwischenproduktes wird dieses in eine vergrößerte Kavität einer weiteren Werkzeugform eingebracht. In dieser vergrößerten Kavität wird in den so gebildeten Zwischenraum ein Kunststoffmaterial eingefüllt, welches sich mit dem umgeformten Zwischenprodukt fest verbindet. Dabei kann es sich bei dem Kunststoffmaterial um einen Thermoplasten oder einen Duroplasten oder eine Mischung desselben handeln. Auf diese Weise entsteht ein sehr leichtes, in gewünschter Weise verstärktes Produkt, welches nicht nur gute mechanische Eigenschaften aufweist, sondern in der endgültigen Form als funktionales Systembauteil mit einem umspritzten oder angespritzten Kunststoffbereich ausgebildet ist. Auf diese Weise können Produkte mit Sichtoberflächen oder mit funktionalen Elementen geschaffen werden. So ist es möglich, das vollkonsolidierte Zwischenprodukt vollständig mit dem Kunststoffmaterial zu umgeben, so dass das Zwischenprodukt von außen (beispielsweise von der Sichtseite) nicht mehr zu erkennen ist. Es können aber auch farblich oder haptisch unterschiedliche Bereiche hergestellt werden.

Eine besonders bevorzugte Ausführungsform ist dadurch gegeben, wenn zwischen dem ersten Schritt des Umformens und dem zweiten Schritt des Urformens ein funktionales Element in die vergrößerte Kavität so eingefügt wird, dass es beim Einbringen des Kunststoffmaterials eine feste Verbindung mit dem Kunststoffmaterial und dem vollkonsolidierten Zwischenprodukt eingeht. So ist es beispielsweise möglich, auf diese Art und Weise eine Fahrzeugtür für ein Kraftfahrzeug herzustellen, bei der über thermoplastische Prepregs (auch als Organobleche bezeichnet) für die Crashsicherheit erforderliche Verstärkungsstrukturen geschaffen werden, an die dann mittels des eingebrachten Kunststoffmaterials funktionale Elemente wie Scharniere oder Schlösser befestigt werden. An diesem Beispiel sieht man die verschiedenen Funktionen der unterschiedlichen Materialien und Elemente sehr deutlich. So stellt das Faser-MatrixMaterial die Verstärkungsstruktur dar. Das eingebrachte Kunststoffmaterial umgibt diese Verstärkung und bildet den Türkörper inklusive der Sichtseiten aus, wobei die Funktionselemente wie Scharniere und Schlösser mit eingebunden und mittels der Kunststoffanbindung an der Verstärkungsstruktur befestigt sind.

Natürlich kann man auch bei im zweiten Schritt eingebrachten duroplastischen oder thermoplastischen Matrix faserverstärkte Materialien verwenden, wobei. sich dann aufgrund der Verarbeitung (Spritzgießen, Dosieren) eher Kurzfasem bzw. Fasern bis ca. 5 mm Länge eignen.

Natürlich kann man auch bei den Matrixmaterialien des imprägnierten Faser-Matrix-Halbzeuges wie auch beim eingebrachten Kunststoff solche Kunststoffkombinationen verwenden, die eine besonders gute Haftung miteinander gewährleisten.

Zur Umformung des Faser-Matrix-Halbzeugs ist in der Regel dessen Erwärmung notwendig. Diese Erwärmung des Halbzeuges kann bereits vor dem Einlegen in die Werkzeugform oder aber auch in der Werkzeugform selbst geschehen. Im letzteren Fall müssen dann die entsprechenden Heizelemente zur Verfügung gestellt sein. Beispielsweise kann die Erwärmung über Induktions-, Infrarot- oder elektrische Widerstandsheizung durchgeführt werden.

Ferner kann das umgeformte, vollkonsolidierte Zwischenprodukt nach dem Umformungsschritt behandelt oder bearbeitet werden. So ist beispielsweise eine dimensionsmäßige Bearbeitung an den Rändern oder das Einbringen von Ausnehmungen oder Löchern möglich. Auch ist eine Behandlung in Form einer Plasmabehandlung, eines Sprühauftrags oder einer Erwärmung in einem zweiten Schritt möglich, um das so hergestellte Zwischenprodukt für den nachfolgenden Schritt vorzubereiten. Auch andere Behandlungs- oder Bearbeitungsschritte sind denkbar.

Eine besonders bevorzugte Ausführungsform ist dadurch gegeben, dass zwischen dem Schritt des Umformens und dem Schritt des Urformens oder zwischen zwei Schritten des Urformens funktionale Elemente in eine vergrößerte Kavität eingebracht werden. Diese funktionalen Elemente können dann mittels des Kunststoffmaterials in das Produkt integriert werden. Dabei ist es möglich, ein funktionales Element vollständig einzugießen, wie dies beispielsweise bei einem Sensor (z. B. einem Crash-Sensor, einem Drucksensor, einem Wärmesensor oder einem Dehnmessstreifen), Leuchten (wie LED) oder anderen Elementen möglich ist. Natürlich müssen in diesem Fall die für den Sensor erforderlichen Anschlüsse entsprechend aus dem Produkt herausgeführt sein, sofern drahtlose Kommunikation gewählt wird. Auch ist es möglich als funktionale Elemente (z.B. Sensoren) Polymersensoren oder auf Unterlagen, Matten, Gewebe, etc. ein- oder aufgestickte Sensoren zu verwenden.

Auf der anderen Seite ist es aber auch möglich, das funktionale Element (z.B. Aktuatoren) nur teilweise einzugießen, so dass es einerseits mit dem Produkt selbst fest verbunden ist, andererseits aber ein funktionale Teil des funktionalen Elementes von außen zugänglich ist, wie dies bei einem Scharnier, bei einem Türschloss, aber auch bei einer Antriebswelle eines Motors etc. vorstellbar ist.

Insgesamt lassen sich mit der vorliegenden Erfindung damit in einem Produktionsverfahren komplette Leichtbauprodukte in effizienter und kostengünstiger Weise herstellen, wie dies bisher nicht möglich war. So können Produkte mit besonderer mechanischer Belastbarkeit (Steifigkeit, Zug- oder Dehnverhalten) in Kombination mit einer gewünschten Oberflächengestaltung unter Einbeziehung von integrierten Funktionskomponenten gebildet werden. Die gewerbliche Anwendbarkeit dieses Verfahrens ist enorm, da damit zukünftig viele Systemeinheiten mit Verstärkungsstrukturen in einem Arbeitsgang und ohne weitere Bearbeitung denkbar sind, bei denen bisher die Verstärkungsstrukturen aus metallischen Materialien bestehen.

Besonders bevorzugte Ausführungsformen und Ausgestaltungen sind in den Unteransprüchen wie auch in den nachfolgenden Ausführungsbeispielen erwähnt.

Die vorliegende Erfindung ist nachfolgend anhand von zwei Ausführungsbeispielen und mit Bezug auf die beiliegenden Zeichnungen näher erläutert. Die Zeichnungen zeigen in
- Fig. 1: eine sehr schematische Darstellung einer Schließeinrichtung einer Kunststoff-Spritzgießmaschine mit Handlingseinrichtungen zur Durchführung eines Verfahrens gemäß einer ersten Ausführungsform der Erfindung und
- Fig.2: eine sehr schematische Darstellung einer Alternative für eine Schließeinrichtung einer Kunststoff-Spritzgießmaschine mit Handlingsein- richtungen sowie einer zusätzlichen Einspritzeinrichtung zur Durchführung eines Verfahrens gemäß einer zweiten Ausführungsform der Erfindung.

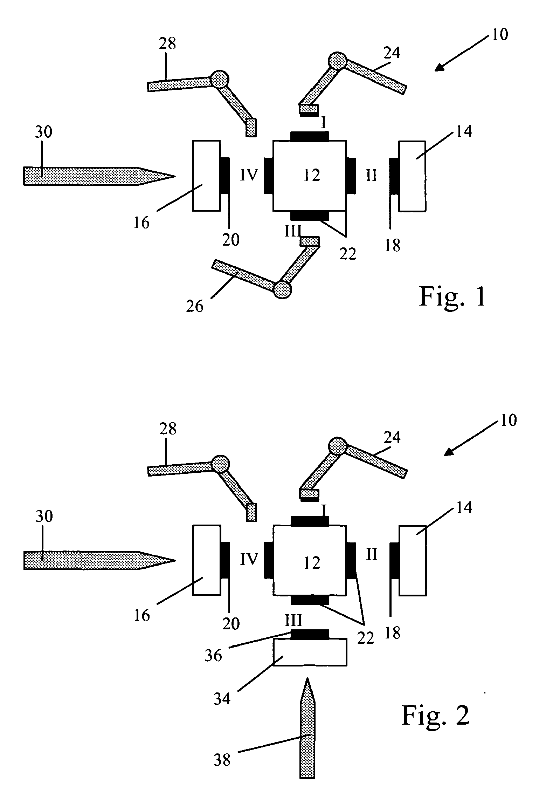

In Fig. 1 ist in sehr schematischer Weise die Schließeinheit einer Spritzgießmaschine dargestellt. Dafür wurden für das Verständnis nicht notwendige Elemente der Schließeinrichtung wie auch der gesamten Spritzgießmaschine, wie z.B. das Maschinenbett, die die Platten verbindenden Zugholme, die verschiedenen Antriebssysteme, etc. nicht dargestellt. Ein Fachmann auf dem vorliegenden Gebiet weiß jedoch, wie eine Spritzgießmaschine auszugestalten ist, so dass auf diese Darstellung bei der vorliegenden Beschreibung verzichtet werden kann.

Fig. 1 zeigt in der schematischen Weise eine Schließeinheit 10 von oben, die zentral einen etwa quaderförmigen Wendeblock 12 (nachfolgend auch Wendewürfel genannt) umfasst, der auf einem drehbar angetriebenen Drehteller positioniert ist und sich um seine vertikale Zentralachse drehen lässt. Der Wendewürfel besitzt an seinen Seiten vier Aufspannflächen, an denen Hälften von Werkzeugformen angeordnet sind. Dabei sind lediglich zwei Hälften in Fig. 1 mit Bezugsziffer 22 bezeichnet. Alle diese Hälften der Werkzeugformen, die an dem Wendewürfel befestigt sind, sind jedoch gleich ausgestaltet.

Axial gesehen ist der Wendewürfel 12 fest positioniert. Zu beiden Seiten des Wendewürfels, diametral gegenüber sind zwei bewegliche Aufspannplatten 14 und 16 angeordnet, die über entsprechende Antriebssysteme (nicht dargestellt) hinsichtlich des Wendewürfels 12 auf- und zu verfahrbar angetrieben und auf Schienen (nicht dargestellt) geführt sind. Die beiden Aufspannplatten 14 und 16 tragen jeweils eine erste Hälfte 18 für eine erste Werkzeugform sowie eine erste Hälfte 20 für eine zweite Werkzeugform, wobei beide Werkzeugformen im zusammengefahrenen - also geschlossenen - Zustand jeweils eine darin ausgebildete Kavität definieren.

Alternativ kann man die Schließeinheit auch so ausgestalten, dass eine Aufspannplatte fest angeordnet ist und sowohl der Wendewürfel (zusätzlich zu seiner Drehbarkeit) wie auch die zweite Aufspannplatte zum Öffnen und Schließen der Schließeinheit bzw. der Werkzeuge linear verschieblich angeordnet sind.

Um den Wendewürfel 12 bzw. die Schließeinheit 10 herum sind verschiedene Robotarme 24, 26 und 28 angeordnet, die entsprechend einer Programmierung bewegt werden können, zu den jeweiligen, geöffneten Werkzeugformen bzw. Formhälften Zugang haben und Behandlungs- oder Bearbeitungsschritte wie nachfolgend noch erläutert durchführen können.

In Fig. 1 links der beweglichen Aufspannplatte 16 ist nur stark schematisch ein Plastifizier- und Einspritzeinheit angedeutet. Diese Plastifizier- und Einspritzeinheit umfasst eine in einem Plastifizierzylinder drehbar aufgenommene Schnecke, mit der ein über eine Zuführöffnung zugegebenes Kunststoffmaterial aufgeschmolzen und mittels der als Schubschnecke ausgebildeten Schnecke in die geschlossene Kavität des Formwerkzeugs mit der Formhälfte 20 eingebracht werden kann. Zu diesem Zweck umfasst die Plastifizier- und Einspritzeinheit auch noch weitere Antriebe zum Drehen der Schnecke, zum Axialverschieben der Schnecke sowie zum Anpressen der Plastifizier- und Einspritzeinheit an die entsprechende Öffnung der Aufspannplatte 16 bzw. der Werkzeughälfte 20 selbst. Diese sind jedoch aus Übersichtlichkeitsgründen nicht dargestellt.

Der Ablauf des mit dieser Vorrichtung durchzuführenden Verfahrens ist nun wie folgt: In Pos. I. (die in Fig. 1 der 12 Uhr Position entspricht) ist die Formwerkzeughälfte an dem Wendewürfel 12 zunächst leer. In den darin ausgebildeten Kavitätsbereich der Formwerkzeughälfte wird mittels des Robotarms 24 ein nicht oder nur teilkonsolidiertes Faser-Matrix-Halbzeug und beispielsweise ein Organoblech eingelegt. Nach diesem Schritt wird der Wendewürfel 12 um 90° im Uhrzeigersinn gedreht, so dass sich die Formwerkzeughälfte mit dem Faser-Matrix-Halbzeug nunmehr in der Position II (3 Uhr Position) befindet. Dabei ist diese Werkzeughälfte beheizbar, so dass das Faser-Matrix-Halbzeug auf eine bestimmte Temperatur erwärmt wird. Anschließend wird die Schließeinheit 10 geschlossen, wodurch sich die Aufspannplatte 14 auf den Wendewürfel 12 zu bewegt. Dabei wird ein Präge- oder Pressschritt durchgeführt, bei dem das in die Werkzeugformhälfte eingelegte Faser-Matrix-Halbzeug umgeformt und voll konsolidiert wird.

Nach diesem Verfahrensschritt wird die Schließeinheit 10 wieder geöffnet und anschließend der Wendewürfel 12 erneut um 90° im Uhrzeigersinn in Position III (6 Uhr Position) gedreht. Dabei verbleibt das nunmehr umgeformte, vollkonsolidierte Zwischenprodukt in der Werkzeugformhälfte 22. In dieser Position wird mittels des Robotarms 26 ein Bearbeitungs- und Behandlungsschritt durchgeführt. Es werden insbesondere die Ränder des so hergestellten Zwischenproduktes bearbeitet und ein funktionales Element auf das Zwischenprodukt aufgebracht.

Im nächsten Schritt wird der Wendewürfel wiederum um 90° im Uhrzeigersinn gedreht, so dass sich das Zwischenprodukt mit dem funktionalen Element nun in Pos. IV (9 Uhr Position) befindet. In dieser Position wird die Schließeinheit 10 wieder geschlossen, wodurch eine vergrößerte Kavität gebildet ist, die zwischen dem Zwischenprodukt noch einen Füllraum belässt. Auch das im vorherigen Schritt auf das Zwischenprodukt aufgebrachte funktionale Element ist nun innerhalb dieser vergrößerten Kavität aufgenommen.

Nach dem Schließvorgang wird über die entsprechend angedockte Aufschmelz- und Einspritzeinrichtung 30 ein Kunststoffmaterial in die vergrößerte Kavität eingespritzt. Dieses Kunststoffmaterial breitet sich in der gesamten Kavität aus, überflutet das Zwischenprodukt und bindet das funktionale Element mit ein. Dabei kann das Kunststoffmaterial ebenfalls mit Fasern befrachtet sein.

Nach dem zumindest teilweisen Aushärten des Kunststoffmaterials (beim Thermoplasten durch Abkühlen, beim Duroplasten durch Ausreagieren), welches vorliegend ein Thermoplastmaterial ist, kann die Schließeinheit 10 wieder geöffnet und das nunmehr fertiggestellte Produkt mittels des Robotarms 28 entnommen werden.

Das Produkt ist in dieser Position ein vollständig endbearbeitetes Systembauteil, welches mit zumindest einem funktionalen Elemente und einer qualitativ hochwertigen Sichtoberfläche ausgestattet ist. Dennoch ist es ein Composite-Werkstoff mit einem integrierten Verstärkungselement, welches auf dem Faser-Matrix-Halbzeug basiert. Dieses Composite-Produkt hält besonderen Belastungen stand, ist überdies leicht, hat gewünschte Materialeigenschaften und besitzt funktionale Elemente.

Alle oben genannten Arbeiten an den verschiedenen Positionen können zyklusgleich durchgeführt werden, so dass nach jeder 90° Drehung ein fertiges Bauteil entnommen werden kann.

Eine weitere Ausführungsform der vorliegenden Erfindung ist in Fig. 2 gezeigt. Fig. 2 unterscheidet sich von Fig. 1 dadurch, dass anstelle des zweiten Robotarms 26 eine (hier in L-Form) angedockte zweite Spritzgießeinrichtung 38 zusammen mit einem entsprechend ergänzten Formwerkzeug angeordnet ist, welches an einer weiteren bewegliche Aufspannplatte 34 angeordnet ist. Diese Aufspannplatte 34 ist zusammen mit den übrigen Aufspannplatten 14 und 16 schließbar. Auch die weitere Plastifizier- und Einspritzeinheit 38 ist zum Einspritzen eines Kunststoffmaterials ausgebildet.

Nurmehr kann an Pos. II. der Präge- oder Pressschritt wie auch bei der Ausführungsform in Fig. 1 durchgeführt werden. An den Positionen III. und IV. können nunmehr jedoch jeweils vergrößerte Kavitäten mit den Werkzeugformen gebildet werden, in die sukzessive ein Kunststoffmaterial eingespritzt wird. Natürlich können dabei verschiedene Kunststoffmaterialien mit anderen Eigenschaften (mechanische Eigenschaften, haptische Eigenschaften, physikalische Eigenschaften) verwendet werden. Zudem ist es natürlich möglich, was in Fig. 2 nicht dargestellt ist, mit weiteren Robotvorrichtungen Einsatzteile in die Kavitäten zuzuführen. Fig. 2 soll insofern lediglich die Variationsmöglichkeit aufzeigen.

Natürlich können anstelle der Plastifizier- und Einspritzeinheit 30, 38 auch Dosier und Einbringvorrichtungen mit Mischköpfen für duroplastische Materialien (beispielsweise Mischköpfe für Polyurethan) angeordnet sein. Damit ließe sich dann das in der vergrößerten Kavität angeordnete vollkonsolidierte Zwischenprodukt mit einem vernetzenden Kunststoffmaterial (z.B. einem Duroplasten) überfluten. Überdies ist auch eine Kombination von duroplastischen und thermoplastischen Materialien möglich, so könnte anstelle einer Einschnecken-Spritzgießvorrichtung auch eine Zweischnecken-Extrusionsvorrichtung vorgesehen sein, die eine Kunststoffmatrix in einem Schritt mischt. Dabei ist es sogar möglich, thermoplastische und duroplastische Elemente zusammenzumischen, bei denen der vernetzende Anteil entweder bei hohen oder bei niedrigen Temperaturen besonders gut ausreagiert.

Von besonderem Interesse ist dabei eine dynamische Werkzeugtemperierung, und zwar sowohl beim Umformschritt wie auch beim Schritt nach dem Einfüllen des Kunststoffmaterials. Beispielsweise müssen Polyurethan-Materialien über ein gewisses Temperaturniveau erhitzt werden, damit sie schnell ausreagieren. Andere Materialien wie Thermoplaste müssen nach dem Einspritzvorgang möglichst schnell abgekühlt werden, um eine kurze Zykluszeit zu erreichen. Die Temperiereinrichtungen können dabei sowohl im Werkzeug integriert sein wie auch separat vorgesehen, so dass sie beispielsweise mittels Robotvorrichtungen an die Werkzeugform herangefahren werden können. Für den Umformschritt sind dabei Vorwärmtemperaturbereiche von 200 bis 300° C interessant.

Als Anwendungen kommen lokale und großflächige Verstärkungsstrukturen in Betracht, strukturelle und semistrukturelle Bauteile, Bauteile mit funktionalen Elementen, wie mechanischen Funktionalelementen oder elektrischen Funktionalelementen. Von besonderem Interesse sind Bauteile mit Lastpfaden- oder Lastknotenpunkten, Crashelemente, Energieabsorber oder Elemente, wo eine Leichtbauweise, ein hohes Widerstandsmoment oder eine hohe Wärmeförmbeständigkeit gefragt sind.

Als Materialien für das Faser-Matrix-Halbzeug eignen sich neben Gewebesystemen allgemein Fasern, Fasereinleger, auch gefüllte und ungefüllte Matrizen, Waben-, Hohl-, Kammerprofilstrukturen und -systeme mit thermoplastischer oder duroplastischer Matrixschicht.

### Bezugszeichenliste

- 10: Schließeinheit mit Peripherie
- 12: Wendewürfel
- 14: Erste bewegliche Aufspannplatte
- 16: Zweite bewegliche Aufspannplatte
- 18: Erste Formhälfte des ersten Formwerkzeugs
- 20: Erste Formhälfte des zweiten Formwerkzeugs
- 22: Zweite Formhälften für die Formwerkzeuge
- 24: Erster Handhabungsarm
- 26: Zweiter Handhabungsarm
- 28: Dritter Handhabungsarm
- 30: Plastifizier- und Einspritzvorrichtung
- 32:
- 34: Dritte bewegliche Aufspannplatte
- 36: Erste Formhälfte für drittes Formwerkzeug
- 38: Zweite Plastifizier- und Einspritzvorrichtung

## Patentansprüche

1. Verfahren zur Herstellung eines verstärkten Composite-Produktes, bei dem in einer Spritzgießmaschine mit einer Plastifizier- und Einspritzeinrichtung (30) sowie einer Schließeinheit (10) mit zwei Aufspannplatten (14, 16) sowie einer dazwischen angeordneten Wendeplatte (12), in der zumindest zwei Formwerkzeug (18, 20, 22) aufgenommen sind, folgende Schritte durchgeführt werden
- Einlegen eines vorimprägnierten Faser-Matrix-Halbzeuges in eine geöffnete Werkzeugform (18, 20, 22) der Schließeinheit,
- in einem ersten Zyklusschritt Betreiben der Werkzeugform (18, 20, 22) nach Art einer Presse und Umformen des Faser-Matrix-Halbzeuges unter Wärmeeinwirkung in einer ersten Kavität, wobei das Faser-Matrix-Halbzeug vollständig konsolidiert wird,
- Öffnen der Werkzeugform (18, 20, 22),
- Umsetzen des umgeformten vollkonsolidierten Produktes mit der Wendeplatte (12) unter Verbleiben des umgeformten, vollkonsolidierten Zwischenproduktes in einer Werkzeughälfte,
- in einem Zweiten Zyklusschritt der zum ersten Zyklusschritt zyklusgleich verläuft Schließen der Werkzeugform (18, 20, 22) der Schließeinheit (10) unter Ausbildung einer zweiten, gegenüber der ersten Kavität vergrößerten Kavität und Einbringen eines Kunststoffmaterials in die zweite Kavität, wobei sich das umgeformte vollkonsolidierte Produkt mit dem eingebrachten Kunststoffmaterial verbindet und
- Offnen der Werkzeugform (18, 20, 22) nach dem zumindest teilweisen Aushärten des Kunststoffmaterials.

2. Verfahren nach Anspruch 1,
**dadurch gekennzeichnet,**
**dass** das Faser-Matrix-Halbzeug vor dem Umformen erwärmt wird.

3. Verfahren nach Anspruch 1,
**dadurch gekennzeichnet,**
**dass** das Faser-Matrix-Halbzeug in der Werkzeugform (18, 20, 22) erwärmt wird.

4. Verfahren nach einem der Ansprüche 2 oder 3,
**dadurch gekennzeichnet,**
**dass** die Erwärmung über Induktion, Infrarotstrahlung oder elektrische Widerstandsheizung durchgeführt wird.

5. Verfahren nach einem der vorhergehenden Ansprüche,
**dadurch gekennzeichnet,**
**dass** das umgeformte, vollkonsolidierte Produkt nach dem Umformungsschritt bearbeitet oder behandelt wird.

6. Verfahren nach Anspruch 5,
**dadurch gekennzeichnet,**
**dass** die Bearbeitung einen Schneid-, Stanz-, Loch oder Frässchritt umfasst.

7. Verfahren nach Anspruch 5 oder 6,
**dadurch gekennzeichnet,**
**dass** die Behandlung eine Plasmabehandlung, das Aufbringen eines Haftvermittlers oder eine Erwärmung umfasst.

8. Verfahren nach einem der vorhergehenden Ansprüche,
**dadurch gekennzeichnet,**
**dass** nach dem Umformen und vor dem Schließen der Werkzeugform (18, 20, 22) zum Einbringen des Kunststoffmaterials zusätzlich zu dem vollständig konsolidierten Produkt zumindest ein funktionales Element in die vergrößerte Kavität eingebracht wird und dass dieses zumindest eine funktionale Element nach dem Einbringen und durch das Abkühlen oder Ausreagieren des eingebrachten Kunstmaterials mit dem Gewebematerial verbunden wird.

9. Verfahren nach Anspruch 8,
**dadurch gekennzeichnet,**
**dass** als funktionale Elemente mechanische Elemente und/oder Sensoren und/oder Aktuatoren eingebracht werden.

10. Verfahren nach einem der vorhergehenden Ansprüche,
**dadurch gekennzeichnet,**
**dass** als Kunststoffmaterial eine Kunststoffschmelze, insbesondere aus thermoplastischem Kunststoff, hergestellt und in die zweite Kavität eingespritzt wird.

11. Verfahren nach einem der vorhergehenden Ansprüche 1 bis 9,
**dadurch gekennzeichnet,**
**dass** als Kunststoffmaterial ein vernetzendes Reaktionsgemisch hergestellt und in die zweite Kavität eingebracht wird.

12. Verfahren nach einem der vorhergehenden Ansprüche,
**dadurch gekennzeichnet,**
**dass** die Schritte des Bildens einer vergrößerten Kavität und das Einbringen eines Kunststoffmaterials zumindest zweimal durchgeführt werden.

## Claims

1. A method for the production of a reinforced composite product, in which in an injection moulding machine with a plasticizing- and injecting arrangement (30) and with a closing unit (10) with two clamping plates (14, 16) and a turnover plate (12) arranged therebetween, in which at least two moulding tools (18, 20, 22) are held, the following steps are carried out
- inserting of a pre-impregnated fibre-matrix semifinished product into an opened tool mould (18, 20, 22) of the closing unit,
- in a first cycle step, operating the tool mould (18, 20, 22) in the manner of a press and shaping the fibre-matrix semifinished product under the action of heat in a first cavity, wherein the fibre-matrix semifinished product is fully consolidated,
- opening the tool mould (18, 20, 22),
- transferring the shaped, fully consolidated product with the turnover plate (12), with the shaped, fully consolidated intermediate product remaining in a tool half,
- in a second cycle step, which runs in an identical cycle manner to the first cycle step, closing the tool mould (18, 20, 22) of the closing unit (10) with the formation of a second cavity, enlarged compared with the first cavity, and introducing a plastic material into the second cavity, wherein the shaped, fully consolidated product unites with the introduced plastic material and
- opening the tool mould (18, 20, 22) after the at least partial hardening of the plastic material.

2. The method according to claim 1,
**characterized in that**
the fibre-matrix semifinished product is heated before shaping.

3. The method according to claim 1,
**characterized in that**
the fibre-matrix semifinished product is heated in the tool mould (18, 20, 22).

4. The method according to one of claims 2 or 3,
**characterized in that**
the heating is carried out via induction, infrared radiation or electrical resistance heating.

5. The method according to one of the preceding claims,
**characterized in that**
the shaped, fully consolidated product is processed or treated after the shaping step.

6. The method according to claim 5,
**characterized in that**
the processing comprises a cutting, punching, piercing or milling step.

7. The method according to claim 5 or 6,
**characterized in that**
the treatment comprises a plasma treatment, the application of an adhesion promoter, or a heating operation.

8. The method according to one of the preceding claims,
**characterized in that**
after the shaping and before the closing of the tool mould (18, 20, 22) for the introduction of the plastic material in addition to the fully consolidated product at least one functional element is introduced into the enlarged cavity, and that this at least one functional element, after the introduction and through the cooling or reacting of the introduced plastic material, is connected with the fabric material.

9. The method according to claim 8,
**characterized in that**
mechanical elements and/or sensors and/or actuators are introduced as functional elements.

10. The method according to one of the preceding claims,
**characterized in that**
a plastic melt, in particular of thermoplastic plastic is produced as plastic material and is injected into the second cavity.

11. The method according to one of the preceding claims 1 to 9,
**characterized in that**
as plastic material, a cross-linking reaction mixture is produced and is introduced into the second cavity.

12. The method according to one of the preceding claims,
**characterized in that**
the steps of the formation of an enlarged cavity and the introduction of a plastic material are carried out at least twice.

## Revendications

1. Procédé de fabrication d'un produit composite renforcé, dans lequel, dans une machine de moulage par injection comprenant un dispositif de plastification et d'injection (30) ainsi qu'une unité de fermeture (10) avec deux plaques de serrage (14, 16) ainsi qu'une plaque-modèle à double face (12) placée entre celles-ci dans laquelle au moins deux moules d'outil (18, 20, 22) sont reçus, les étapes suivantes sont effectuées
- placement d'un semi-produit de fibres-matrice pré-imprégné dans un moule d'outil (18, 20, 22) ouvert,
- dans une première étape du cycle, utilisation du moule d'outil (18, 20, 22) à la manière d'une presse et façonnage du semi-produit de fibres-matrice par effet de la chaleur dans une première cavité, sachant que le semi-produit de fibres-matrice est complètement consolidé,
- ouverture du moule d'outil (18, 20, 22),
- déplacement du produit complètement consolidé façonné avec la plaque-modèle à double face (12) par maintien du produit intermédiaire complètement consolidé façonné dans une moitié de moule,
- dans une deuxième étape du cycle qui s'effectue comme la première étape du cycle, fermeture du moule d'outil (18, 20, 22) de l'unité de fermeture (10) par formation d'une deuxième cavité agrandie par rapport à la première cavité et intégration d'un matériau plastique dans la deuxième cavité, sachant que le produit complètement consolidé façonné se lie avec le matériau plastique intégré et
- ouverture du moule d'outil (18, 20, 22) après le durcissement au moins partiel du matériau plastique.

2. Procédé selon la revendication 1, **caractérisé en ce que** le semi-produit de fibres-matrice est chauffé avant le façonnage.

3. Procédé selon la revendication 1, **caractérisé en ce que** le semi-produit de fibres-matrice est chauffé dans le moule d'outil (18, 20, 22).

4. Procédé selon l'une des revendications 2 ou 3, **caractérisé en ce que** le chauffage est effectué par induction, rayonnement infrarouge ou chauffage ohmique.

5. Procédé selon l'une des revendications précédentes, **caractérisé en ce que** le produit complètement consolidé façonné est usiné ou traité après l'étape de façonnage.

6. Procédé selon la revendication 5, **caractérisé en ce que** l'usinage comprend une étape de coupe, d'estampage, de perforation ou de fraisage.

7. Procédé selon la revendication 5 ou 6, **caractérisé en ce que** le traitement comprend un traitement plasma, l'application d'un agent d'accrochage ou un chauffage.

8. Procédé selon l'une des revendications précédentes, **caractérisé en ce qu'**après le façonnage et avant la fermeture du moule d'outil (18, 20, 22) pour intégrer le matériau plastique en plus du produit complètement consolidé façonné, au moins un élément fonctionnel est intégré dans la cavité agrandie, et **en ce que** cet au moins un élément fonctionnel est lié au matériau textile après l'intégration et par le refroidissement ou la réaction du matériau plastique intégré.

9. Procédé selon la revendication 8, **caractérisé en ce que** l'on intègre des éléments mécaniques et/ou des capteurs et/ou des actionneurs comme éléments fonctionnels.

10. Procédé selon l'une des revendications précédentes, **caractérisé en ce qu'**une fonte de plastique, en particulier de plastique thermoplastique, est fabriquée et injectée dans la deuxième cavité comme matériau plastique.

11. Procédé selon l'une des revendications 1 à 9, **caractérisé en ce qu'**un mélange réactionnel à réticulation est fabriqué et intégré dans la deuxième cavité comme matériau plastique.

12. Procédé selon l'une des revendications précédentes, **caractérisé en ce que** les étapes de formation d'une cavité agrandie et d'intégration d'un matériau plastique sont effectuées au moins deux fois.
